Europäisches Patentamt

European Patent Office

Office européen des brevets

(11) Veröffentlichungsnummer: **0 254 118**

**A1**

## EUROPÄISCHE PATENTANMELDUNG

(21) Anmeldenummer: **87109735.8**

(22) Anmeldetag: **07.07.87**

(51) Int. Cl.4: **A01C 7/10 , A01C 7/00**

(30) Priorität: **19.07.86 DE 3624515**

(43) Veröffentlichungstag der Anmeldung:
**27.01.88 Patentblatt 88/04**

(84) Benannte Vertragsstaaten:
**AT DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Mix, Arthur**
**Gerhard-Hauptmannweg15**
**D-2872 Hudo I.O.(DE)**

(54) **Sämaschine, insbesondere für Fahrgassenschaltung ausgerüstet.**

(57) Sämaschine, die insbesondere mit einer Fahrgassenschaltung ausgerüstet ist und über die die Saatgutzufuhr in periodischer Widerkehr zu bestimmten Fahrgassensäscharen zum Anlegen einer Fahrgasse unterbrochen wird. Um in einfacher Weise eine sehr sichere Anzeige zur Überwachung des Saatflusses in den Fahrgassensäscharen und den anderen Säscharen zu schaffen, ist vorgesehen, daß zumindest den Fahrgassensäscharen Sensoren zugeordnet sind, die für den Saatfluß zu den Fahrgassensäscharen repräsentative Signale an eine Überwachungseinrichtung übermitteln, wobei diese Überwachungseinrichtung mit der Fahrgassenschaltung verknüpft ist, daß die Sensoren (20) nur die von den Saatkörnern erzeugten Impulse an die Auswerteschaltung übermitteln und zur Anzeige verwendet werden.

FIG.2

EP 0 254 118 A1

## Sämaschine, die insbesondere mit einer Fahrgassenschaltung ausgerüstet ist

Die Erfindung betrifft eine Sämaschine, die insbesondere mit einer Fahrgassenschaltung ausgerüstet ist, gemäß des Oberbegriffes des Patentanspruches 1.

Eine derartige Sämaschine ist bereits in der Praxis bekannt geworden. Bei dieser Sämaschine sind in den sog. Fahrgassensäscharen Sensoren angeordnet, die den Saatfluß zu den Fahrgassensäscharen überwachen bzw., wenn eine Fahrgasse angelegt werden soll, über ob dann tatsächlich auch kein Saatgut den Fahrgassensäscharen zugeführt wird.

Nun hat es sich in der Praxis gezeigt, daß es nicht ohne weiteres möglich ist, die Sensoren unmittelbar an den Säscharen anzuordnen. Insbesondere wenn keine Fahrgasse angelegt werden soll und wenn kein Saatgut den Fahrgassensäscharen zugeführt wird, kann es zu Fehlalarmen kommen, da durch Kluten oder Steine, die gegen das Säschar treffen, Impulse oder Schwingungen ausgelöst werden, so daß über den Sensor Signale empfangen werden, die als Fehlalarm interpretiert werden.

Der Erfindung liegt die Aufgabe zugrunde, in einfacher. Weise eine sehr sichere Anzeige zur Überwachung des Saatflusses in den Fahrgassensäscharen und den anderen Säscharen zu - schaffen.

Diese Aufgabe wird erfindungsgemäß dadurch gelöst, daß die Sensoren nur die von den Saatkörnern erzeugten Impulse an die Auswerteschaltung übermitteln und diese zur Anzeige verwendet werden. Infolge dieser Maßnahme ergibt sich eine sichere und aussagekräftige Anzeige. Ein Fehlalarm wird vermieden, wenn beispielsweise Kluten oder Steine an das Säschar anschlagen bzw. das Säschar auf Kluten oder Steine auftrifft. Hierzu ist erfindungsgemäß vorgesehen, daß den Sensoren ein Filtersystem zugeordnet ist, welches nur die höheren Frequenzen an die der Anzeige vorgeordnete Schaltung übermittelt bzw. verwertet.

In äußerst einfacher Weise ist hierbei erfindungsgemäß vorgesehen, daß die Sensoren in einem Gummipolster an den Säscharen befestigt sind. Durch das Gummipolster werden die Sensoren gegenüber den Säscharen gekapselt angeordnet, so daß keine Impulse, die durch Auftreffen von Steinen oder Kluten auf das Säschar bzw. durch Anschlagen von Kluten oder Steinen an das Säschar an die Sensoren und somit an die Auswerteschaltung übermittelt werden.

Weitere Einzelheiten der Erfindung sind der Beispielsbeschreibung und den Zeichnungen zu entnehmen. Hierbei zeigen

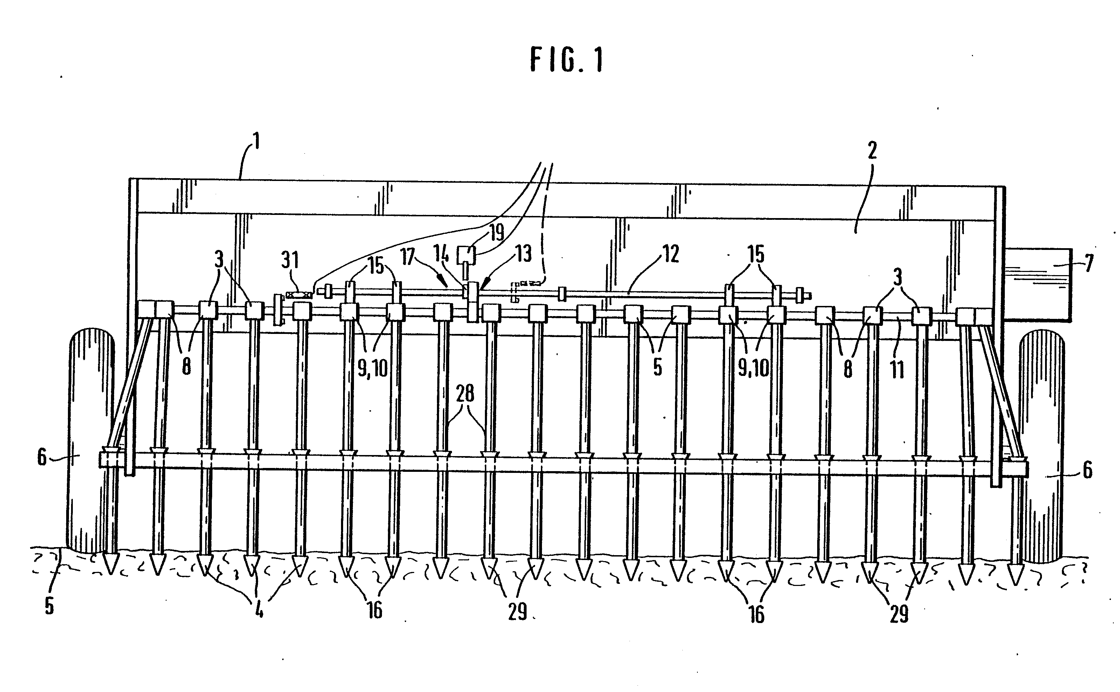

Fig. 1 eine mit einer Fahrgassenschaltung ausgerüstete Sämaschine in der Ansicht von hinten,

Fig. 2 eine schematische Darstellung einer mit einem erfindungsgemäßen Kontrollsystem ausgerüsteten Sämaschine,

Fig. 3 das Blockschaltbild eines erfindungsgemäßen systems und

Fig. 4 das Blockschaltbild des Filtersystems des erfindungsgemäßen Kontrollsystems.

Die Sämaschine 1 weist den Vorratsbehälter 2 auf, aus dem das Saatgut durch in dem Vorratsbehälter 2 befindlichen Auslauföffnungen mit Hilfe der Dosierorgane 3 über die Säschare 4 in dosierbaren Mengen in den Boden 5 eingebracht wird. Während des Betriebes stützt sich die Sämaschine 1 über die Laufräder 6 auf dem Boden 5 ab. Von dem Laufrad 6 aus werden über das einstellbare Regelgetriebe 7 die Dosierräder 8 der Dosierorgane 3 angetrieben. Einzelne Dosierräder 8 sind als Saatgutzufuhrunterbrechungselemente 9 ausgebildet. Diese als Saatgutzufuhrunterbrechungselemente 9 ausgebildeten Dosierräder 10 sind frei drehbar auf der Säwelle 11, die von dem Regelgetriebe 7 angetrieben wird, gelagert. Parallel zu der Säwelle 11 ist an dem Vorratsbehälter 2, oberhalb der Dosierräder 10, die Vorgelegewelle 12 gelagert. Diese Vorgelegewelle 12 ist über den Zahnradtrieb 13, der die Schlingfederkupplung 14 aufweist, drehmomentübertragbar mit der Säwelle 11 verbunden. Weiterhin sind auf der Vorgelegewelle 12 die Zahnräder 15 drehfest angeordnet, deren Verzahnung in die Verzahnung der frei drehbar auf der Säwelle 11 angeordneten Dosierräder 10 eingreift. Somit werden die Dosierräder 10 über die Vorgelegewelle 12 angetrieben, wenn die Schlingfederkupplung 14 eingeschaltet ist. Die Dosierräder 10 sind jeweils den Fahrgassensäschren 16 zugeordnet, die in dem Bereich der von Saatgut freizuhaltenden Spuren, die die Fahrgassen für nachfolgende Arbeitsmaschine ergeben, angeordnet sind, und die Saatgutzufuhr in periodischer Wiederkehr zu den Fahrgassensäscharen 16 unterbrechen. Die Vorrichtung zum Anlegen solcher Fahrgassen wird als Fahrgassenschaltung 17 bezeichnet.

An der Sämaschine 1 ist die Schaltvorrichtung 18 angeordnet, die mittels des Schaltelementes 19, das als Hubelement ausgebildet ist, die Schlingfederkupplung 14 betätigt. An der Sämaschine 1 sind die Dosierräder 10, die die Saatgutzufuhrunterbrechungselemente 9 bei der Unterbrechung ihres Antriebes über die Schlingfederkupplung 14 durch den Hubmagneten 19 bildet, für zwei freizuhaltende Streifen angeordnet.

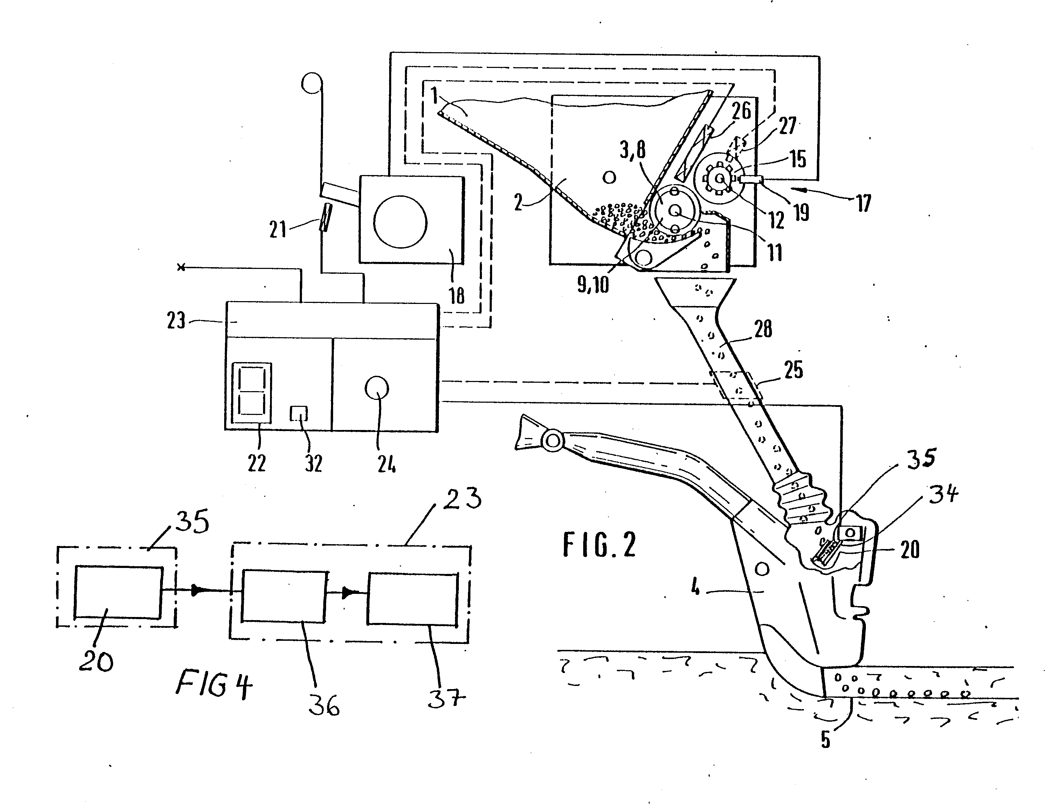

Die Fig. 2 zeigt in schematischer Darstellung ein Kontrollsystem zur Überwachung der mit der Fahrgassenschaltung 17 ausgerüsteten Sämaschine 1. Dieses Kontrollsystem weist die Sensoren 20 und 21 auf. Der Sensor 20 ist beispielsweise direkt im Fahrgassensäschar 16 angeordnet und liefert für den Saatfluß zu diesem Säschar 16 repräsentative Signale, die an eine Schaltung, die wiederum in der als Anzeigeelement 22 ausgebildeten Saatkontrolle 23 angeordnet ist, übermittelt werden. Die Spannungsversorgung dieser Saatkontrolle 23 erfolgt über die Elektroanlage des die Sämaschine 1 ziehenden Schleppers. Der Sensor 21 ist im Bereich der Schaltvorrichtung 18 der Fahrgassenschaltung 17 angeordnet und übermittelt die der jeweiligen Stellung der Fahrgassenschaltung 17 entsprechenden Signale an die Schaltung der Saatkontrolle 23. Die von den Sensoren 20 und 21 erzeugten Signale werden in der Schaltung der Saatkontrolle 23 verarbeitet und Anzeigesignale umgeformt und mit dem Anzeigeelement 22 dargestellt. Diese Schaltung, bzw. die Sensoren 20 und 21 sind derart mit der Fahrgassenschaltung 16 verknüpft, daß beim Anlegen von Fahrgassen, wobei die Saatgutzufuhr in periodischer Wiederkehr zu den Fahrgassensäscharen 16 unterbrochen wird, bei der von Sensor 21 gemeldeter Stellung "Fahrgasse" der Fahrgassenschaltung 17, die Schaltung derart geschaltet ist, daß die Signale der Fahrgassensensoren 20 "kein Saatgut" als korrekt interpretieren. Kommt es nun einmal vor, daß die von den Sensoren 20 und 21 erzeugten Signale voneinander abweichen, führt dies zu einer Fehlermeldung, die über die Anzeige 24 der Saatkontrolle 23 kenntlich gemacht wird.

Es wird dem Landwirt hierdruch als angezeigt, daß beim Anlegen einer Fahrgasse fälschlicher Weise Saatgut durch die Fahrgassensäscharen 16 ausgebracht wird, oder daß bei dem normalen Säen, wenn momentan keine Fahrgasse angelegt werden soll, den Fahrgassensäscharen 16 kein Saatgut zugeführt und somit eine Fahrgassen angelegt wird. Der Landwirt kann beim Anzeigen dieses Signals, welches beispielsweise optisch und akustisch unterstützt sein kann, sofort das Säen unterbrechen und den Fehler feststellen und beseitigen, um dann anschließend das Säen in korrekter Weise weiterzuführen. Bei diesem Fehler kann es sich beispielsweise um ein Klemmen des Schiebers, ein Klemmen der Kupplung zwischen Särad und Säwelle, eines Fehlers bzw. Stromausfall in den Übertragungselementen, einem Schaden an den Betätigungselementen für die Unterbrechung des Saatgutes zu den Fahrgassensäscharen oder zu Unterbrechungselementen selbst etc., handeln.

Die Anordnung der Sensoren zum Erfassen der jeweilig zum Überwachen einer mit einer Fahrgassenschaltung 17 ausgerüsteten Sämaschine 1 benötigten Informationen, soll sich nicht nur auf die beschriebenen Sensoren in den Fahrgassensäscharen beschränken. Die Fig. 2 zeigt weistere, mit strichpunktierten Linien angedeutete Sensoren 25, 26 und 27, wobei der Sensor 25 beispielsweise im Bereich der Saatleitung 28 angeordnet ist und dem Saatfluß zu den Fahrgassensäscharen 16 repräsenative Signale liefert. Des weiteren besteht die Möglichkeit, die Drehbewegung der Dosierräder 10 zu erfassen. Hierzu werden die Sensoren 26 an den als Saatgutzufurunterbrechungselementen 9 ausgebildeten Dosierrädern 10 angeordnet und liefern die Signale "Dosierräder 10 drehen sich" oder "Dosierräder 10 stehen still", weil ein Drehen der Dosierräder 10 Saatgutförderung und ein Stillstehen der Dosierräder 10 keine Saatgutförderung bedeuten. Die Erfassung der Drehbewegung der Vorgelegewelle 12 durch den Sensor 27 bietet eine weitere Möglichkeit zum Erzeugen von für den Saatfluß zu den Fargassensäscharen 16 repräsentativen Signalen.

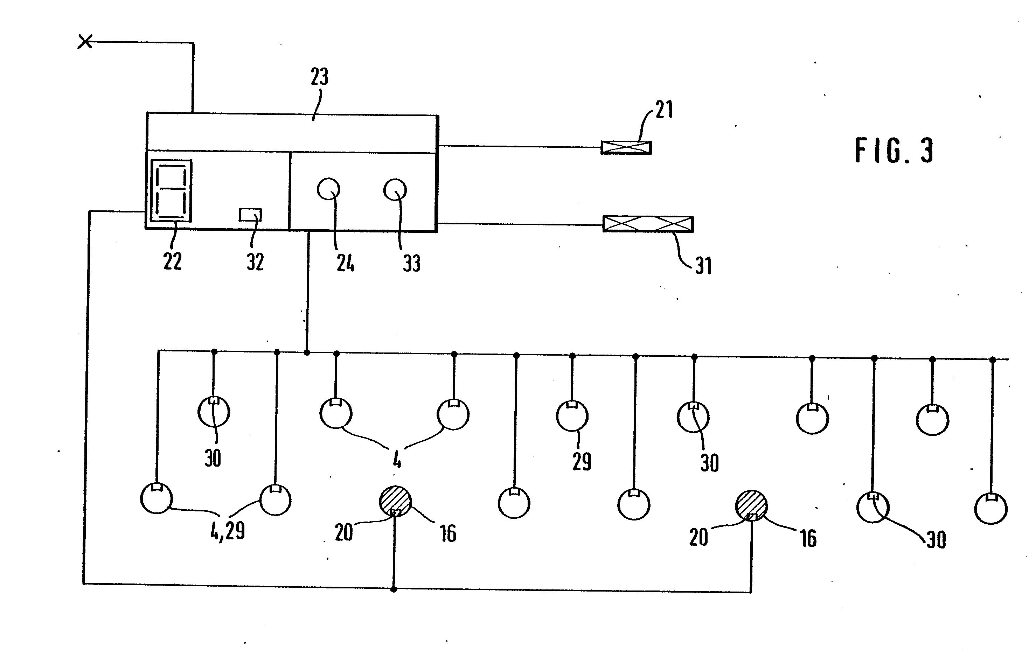

Im folgenden wird ein weiteres Kontrollsystem zur Überwachung einer mit einer Fahrgassenschaltung 17 ausgerüsteten Sämaschine 1 anhand der Fig. 3 erläutert:

Die Fig. 3 zeigt das Kontrollsystem in Form eines Blockschaltbildes, bei dem es sich beispielsweise um eine Sämaschine mit zweireihiger Scharanordnung handelt. Dieses Kontrollsystem weist sowohl an den Fahrgassensäscharen 16 als auch an den Fahrgassensäscharen 29 angeordnete Sensoren 20 und 30 zum Erfassen des jeweiligen Saatflusses auf, wobei die Fahrgassensäschare 16 und Nichtfahrgassensäschare 29 derart verknüpft sich, daß die in den Fahrgassensäscharen 16 angeordneten Sensoren 20 separat in Reihe und die in den Nichtfahrgassensäscharen 29 angeordneten Sensoren 30 ebenfalls separat in Reihe geschaltet sind. Die, von diesen Sensoren 20 und 30 erzeugten Signale werden an die Schaltung der Saatkontrolle 23 übermittelt und in entsprechender Weise verarbeitet. Dieses erfindungsgemäße Kontrollsystem verbessert die Kontrolle des Ausbringens des Saatgutes einer mit einer Fahrgassenschaltung 17 ausgerüsteten Sämaschine 1 in erheblichem Maße und liefert dem Benutzer alle zur Überwachung notwendigen Informationen.

Im folgenden wird die erfindungsgemäße Funktionsweise der Sensoren in Verbindung mit der Fahrgassenschaltung beschrieben:

Zu Beginn der Säarbeit stellt der Landwirt an dem Schaltkopf der Schaltvorrichtung 18 die entsprechende Anfangsstellung der Fahrgassenschaltung ein. Über den Korrekturkopf 32 der Saatkontrolle 23 wird die entsprechende Stellung des Schaltkopfes der Fahrgassenschaltung eingegeben. Angenommen bei den ersten beiden Überfahrten über das zu bestellende Feld soll keine Fahrgasse angelegt werden. Bei diesen beiden Überfahrten melden alle Sensoren 20 und 30, die den Fahrgassensäscharen 16 und den Nichtfahrgassensäscharen 29 zugeordnet sind, "Saatfluß". Bei der dritten Überfahrt soll nun in gewünschter Weise eine Fahrgasse angelegt werden. Durch das jeweilige Weiterschalten des Schaltkopfes am Feldende, hat auch die Schaltung der Saatkontrolle 23 weitergezählt und der Schaltkopf betätigt in dieser Stellung "Fahrgasse" den Hubmagneten 19, so daß die Saatgutzufuhr zu den Fahrgassensäscharen 16 unterbrochen wird. Der Sensor 21 erkennt jetzt die Stellung "Fahrgasse" und die Fahrgassensensoren 20 melden "kein Saatfluß". Diese Informationen werden an die Schaltung der Saatkontrolle 23 weitergeleitet. Die Schaltung ist derart mit der Fahrgassenschaltung verknüpft, daß es zu keiner Fehlermeldung kommt, wenn die Sensoren 20 und 21 die Signale "kein Saatfluß" und "Fahrgasse" an die Schaltung liefern und als korrekt interpretieren. Am Feldende wird der Schaltkopf der Fahrgassenschaltung weitergeschaltet und der Hubmagnet 19 derart betätigt, so daß die Saatgutzufuhr zu den Fahrgassensäscharen 16 wieder hergestellt ist. Während der nächsten vier Überfahrten über das zu bestellende Feld soll keine Fahrgasse angelegt werden. Alle Sensoren 20 und 30 der Fahrgassensäschare 16 und Nicht-fahrgassensäschare 29 müssen während der nächsten vier Überfahrten "Saatfluß" melden. Meldet jetzt plötzlich, während dieser vier Überfahrten einer der Sensoren 20 oder 30 "kein Saatfluß" oder der Sensor 21 erkennt plötzlich die Stellung "Fahrgasse", während die Sensoren 20 "Saatfluß" der Fahrgassensäschare 16 melden, kommt es zu einer Fehlermeldung, die über die Anzeige 24 der Saatkontrolle 23 kenntlich gemacht wird. Der Schlepperfahrer stoppt die Säarbeit und geht der Ursache für die Fehlermeldung nach, behebt diese zur Fehlermeldung geführte Ursache und setzt die Säarbeit fort. Nach den vier Überfahrten, bei denen keine Fahrgassen angelegt werden, kommt es jetzt in bereits beschriebener Weise zum Anlegen einer Fahrgasse, wobei sich dieser Vorgang jetzt in periodischer Wiederkehr wiederholt.

Zur Entlastung des Schlepperfahrers, der die zu einer Fehlermeldung geführte Ursache zuerst herausfinden muß, läßt sich eine weitere Anzeige 33 neben der Anzeige 24 der Saatkontrolle 23 anordnen, so daß die Anzeige 24 beispielsweise der Fahrgassenschaltung 17, d.h. den Sensoren 20 und 21, die den Fahrgassensäscharen 16 und dem Schaltkopf der Schaltvorrichtung 18 zugeordnet sind, zugeordnet ist. Die Anzeige 33 läßt sich beispielsweise den Nichtfahrgassensäscharen 29 zuordnen, so daß der Schlepperfahrer bei einer Fehlermeldung sofort erkennt, ob die Ursache dieser Fehlermeldung der Fahrgassenschaltung 17 oder den Nichtfahrgassensäscharen 29 zuzuordnen ist.

Die Sensoren 20 sind mittels der Halterung 34 und dem Gummipolster 35 an jedem Säschar 4 befestigt. Durch das Gummipolster 35 wird verhindert, daß Störsignale, die von dem Säschar 4 bzw. von außen auf das Säschar 4 auftreffenden Kluten oder Steine, die auf der Bodenoberfläche liegen, herrühren, bis zu den Sensor 20 vordüngen. Des weiteren weist die Saatkontrolle 23 das elektronische Filtersystem 36 auf, welches nur die höheren Frequenzen an die der Anzeige vorgeordneten Schaltung 37 übermittelt bzw. verwertet. In diese Schaltung 37 ist gleichzeitig das Anzeigeelement 22 integriert. Aufgrund des Gummipolsters 35 sowie des Filtersystems 36 wird sichergestellt, daß die Sensoren 20 nur die von den Saatkörnern erzeugten Impulse an die Auswerteschaltung 23 bzw. 37 übermitteln und diese zur Anzeige verwendet werden.

## Ansprüche

1. Sämaschine, die insbesondere mit einer Fahrgassenschaltung ausgerüstet ist und über die die Saatgutzufuhr in periodischer Widerkehr zu bestimmten Fahrgassensäscharen zum Anlegen einer Fahrgasse unterbrochen wird, dadurch gekennzeichnet, daß zumindest den Fahrgassensäscharen Sensoren zugeordnet sind, die für den Saatfluß zu den Fahrgassensäscharen repräsentative Signale an eine Überwachungseinrichtung übermitteln, wobei diese Überwachungseinrichtung mit der Fahrgassenschaltung verknüpft ist, daß die Sensoren (20) nur die von den Saatkörnern erzeugten Impulse an die Auswerteschaltung übermitteln und zur Anzeige verwendet werden.

2. Sämaschine nach Anspruch 1, dadurch gekennzeichnet, daß den Sensoren (20) ein Filtersystem (36) zugeordnet ist, welches nur die höheren Frequenzen an die der Anzeige vorgeordneten Schaltung (37) übermittelt bzw. verwertet.

3. Sämaschine nach Anspruch 1 oder 2, dadurch gekennzeichnet, daß die Sensoren in einem Gummipolster (35) an den Säscharen befestigt sind.

# FIG. 1

0 254 118

FIG. 2

FIG 4

0 254 118

FIG. 3

0 254 118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | AU-B- 497 267 (DICKEY-JOHN CORP.) <br> * Ansprüche 1 * | 1 | A 01 C 7/10 <br> A 01 C 7/00 |
| P,X | EP-A-0 189 789 (AMAZONEN-WERKE H. DREYER GMBH & CO. KG) <br> * Ansprüche 1-4, 6 * | 1 | |
| A | DE-A-2 817 779 (P. NORDSTERN A/S) <br> * Anspruch 1 * | 1 | |
| A | DE-A-3 419 884 (AMAZONEN-WERKE H. DREYER GMBH & CO. KG) <br> * Ansprüche 1-3, 7, 8 * | 1 | |

RECHERCHIERTE SACHGEBIETE (Int. Cl.4)

A 01 C 7/00

Der vorliegende Recherchenbericht wurde für alle Patentansprüche erstellt.

| Recherchenort | Abschlußdatum der Recherche | Prüfer |
|---|---|---|
| BERLIN | 15-10-1987 | SAMWEL P.N. |